# EUROPEAN PATENT SPECIFICATION

(11) **EP 2 942 261 B1**
(45) Date of publication and mention of the grant of the patent: **11.08.2021**
(21) Application number: 15166759.9
(22) Date of filing: 07.05.2015
(51) Int. Cl.: B62B 3/00

(54) **A CARGO RESTRAINER FOR A CONTAINER AND A ROLL CONTAINER COMPRISING THE SAME AS WELL AS A CARGO RESTRAINING SYSTEM FOR A PRISMATIC CONTAINER AND A ROLL CONTAINER COMPRISING THE SAME**
FRACHTSICHERUNG FÜR EINEN CONTAINER UND EIN ROLLCONTAINER DAMIT SOWIE EIN FRACHTSICHERUNGSSYSTEM FÜR EINEN PRISMENFÖRMIGEN CONTAINER UND EIN ROLLCONTAINER DAMIT
DISPOSITIF DE RETENUE DE CHARGEMENT POUR CONTENEUR ET CONTENEUR ROULANT COMPRENANT CELUI-CI, AINSI QU'UN SYSTÈME DE RETENUE DE MARCHANDISES POUR RÉCIPIENT PRISMATIQUE ET CONTENEUR ROULANT COMPRENANT CELUI-CI

(30) Priority: 08.05.2014 GB 201408163
(43) Date of publication of application: 11.11.2015
(73) Proprietor: K. Hartwall Oy AB, 01150 Söderkulla (FI)
(72) Inventor: JÄRVI, Mikko, 01150 Söderkulla (FI); RANINEN, Jussi, 01150 Söderkulla (FI)
(74) Representative: Laine IP Oy

(56) References cited:
- EP-A1- 1 428 763
- EP-A1- 2 815 949
- WO-A1-03/090589
- WO-A1-2004/080780
- AT-U1- 11 917
- DE-B3-102008 014 740
- FR-A1- 2 612 863
- US-A- 4 180 277

## Description

### FIELD OF THE INVENTION

The present invention relates to logistics equipment. In particular, the invention relates to containers for transporting parceled goods, such as letters and small boxes sent by mail. More specifically, the invention relates to a cargo restrainer, cargo restraining system and roll containers according to the preamble portions of claims 1, 10, 13 and 14, respectively.

### BACKGROUND ART

Before delivery to the recipient, mail and generally speaking all logistics items are transported in consolidated units. There are known a vast variety of containers for facilitating such bulk transports. In mail logistics at least, roll containers are the *de facto* solution for transporting letters and packages between and within hubs before the parcel is delivered to the recipient.

Conventional containers include at least two fixed wall sections and a door, which covers the remaining at least one lateral side of the container. The fixed walls feature a peripheral frame surrounding a mesh tight enough to safely keep all contents within the container. To prevent items from falling out the container via the exposed side(s) of the container, add-on doors have been created for modifying an otherwise exposed container to be suitable for transporting small parcels.

One such add-on door is known from EP 1428763 A1, which discloses a tarpaulin made of flexible material that can be retrofitted to a roll container by using three horizontal straps, which secure the tarpaulin between mutually opposing side frame sections for covering an exposed lateral side of the roll container. The tarpaulin is made of elastic material such as polyethylene and the straps are made of an inelastic material with a particular section thereof made of elastic material. The straps extend from a peripheral frame beam of one side frame section, across the exposed side, around the corner formed by the peripheral frame beam of the opposing side frame section and to the mesh of that side frame section. The end of the strap connected to the peripheral frame beam is connected such to allow pivoting in respect to the beam, i.e. hinged. The opposing end of the strap is provided with a hook to be conveniently attached to the mesh of the other side frame section. The elastic portion of the strap is used for attaching the hook such that the tarpaulin extends tightly across the exposed side of the roll container. One strap is provided to the bottom portion of the tarpaulin, one to the middle and one to the top portion of the tarpaulin.

On the other hand, EP 2815494 A1 discloses several accessories for covering side frame sections of roll container by virtue of, e.g. snap-on panels that are dimensioned to fit inside the frame of side walls or the space between the side walls so to as to cover an exposed side or the mesh of the side wall delimited by the frame.

A problem associated with conventional roll containers with integrated or retrofitted doors is that when the door is opened, the contents of the container tend to fall out in an uncontrolled manner. The problem is most prominent in mail transport, wherein the letters are stacked on top of each other such that they can easily slide off the container thus creating a large spill.

It is therefore an aim of the present invention to solve the problem of managing the contents a container for the transport of small parceled items - particularly letters - when the door is opened for unloading of the container.

### SUMMARY

According to one aspect, the aim is achieved with aid of a novel cargo restrainer, which includes a covering member extending along a width dimension of a container for covering an exposed side thereof. The covering member extends over the width dimension of the container and reaches over aligned peripheral frame beams of opposing side frame sections of the container. The cargo restrainer also includes a strap, which attaches the covering member to and between the opposing side frame sections of the container. The covering member features a plurality of consecutively connected self-supporting panels and at least one pivoting arranged between each adjacent panel to connect and articulate the panels to each other about an axis, which extends in the width dimension of the container.

More specifically, the cargo restrainer according to the present invention is characterized by the characterizing portion of claim 1.

According to another aspect, the aim is also achieved with aid of a novel cargo restraining system for a prismatic container including two lateral frame sections opposing and distanced from each other and at least one exposed lateral side. The system includes an inner sleeve, which lines the inner side of the three lateral frame sections of the container for preventing small objects from escaping though openings in said frame sections. The system also includes a cargo restrainer as recited above.

More specifically, the cargo restraining system according to the present invention is characterized by containing a cargo restrainer according to claim 1.

According to yet another aspect, the aim is also achieved with aid of a novel roll container, which includes two lateral frame sections opposing and distanced from each other and at least one exposed lateral side. The roll container also includes a cargo restrainer as recited above.

More specifically, the roll container according to the present invention is characterized by containing a cargo restrainer according to claim 1.

According to yet another aspect, the aim is also achieved with aid of another novel roll container including two lateral frame sections opposing and distanced from each other and at least one exposed lateral side. The roll container also includes a cargo restraining system as recited above.

More specifically, the roll container according to the present invention is characterized by containing a cargo restraining system according to claim 10.

Considerable benefits are gained with aid of the present invention. Because the cargo restrainer is made of a plurality of superposed and self-supporting panel elements, the cargo restrainer may be opened sequentially about the horizontal axis. Such a possibility enables the logistics personnel to remove the cargo restrainer in a controlled manner such that spillage of the contents of the container is minimized.

### BRIEF DESCRIPTION OF DRAWINGS

In the following, exemplary embodiments of the invention are described in greater detail with reference to the accompanying drawings in which:
Fig. 1 presents an isometric side view of a roll container comprising three fixed lateral wall sections and a cargo restraining system according to one embodiment, Fig. 2 presents a detailed view of a highlighted portion of the cargo restraining system of Fig. 1,
Fig. 3 presents an opposite isometric side view of the roll container of Fig. 1, and
Fig. 4 presents a detailed view of a highlighted portion of the cargo restraining system of Fig. 3.

### DETAILED DESCRIPTION OF EXEMPLARY EMBODIMENTS

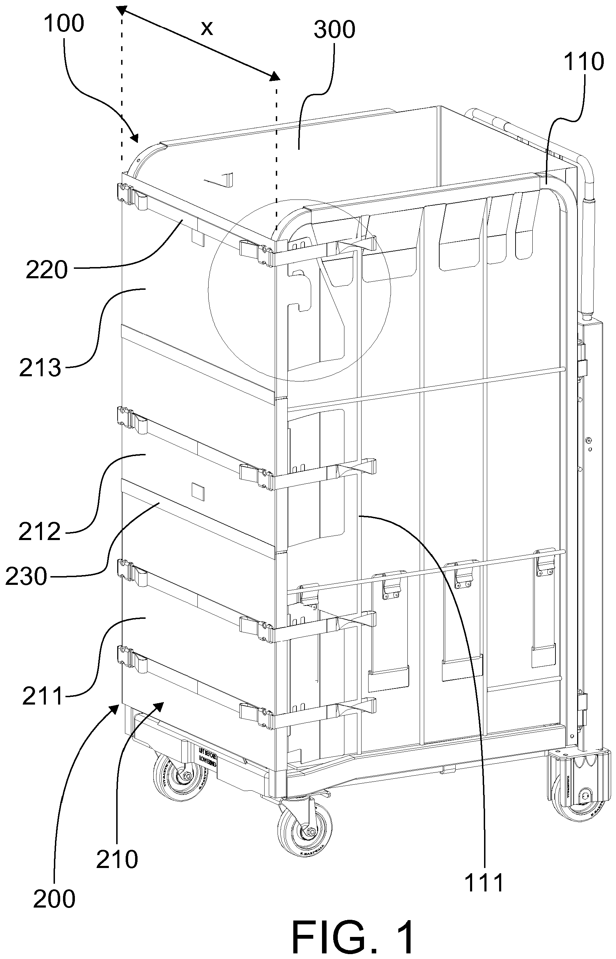

As can be seen from Fig. 1, a cargo restraining system according to one embodiment includes an inner sleeve 300, which is arranged inside a roll container 100, and a cargo restrainer 200, which arranged to cover an exposed side between two opposing side frame sections 110 of the roll container 100. The roll container 100 has a width dimension x, which is defined by the distance between side frame sections 110 of the container 100 that oppose each other.

The cargo restrainer 200 includes two major components: a covering member 210 and at least one strap 220. The covering member 210 includes a number of self-supporting panels 211 - 213 arranged in a chain such that each subsequent panel is connected pivotably by a pivoting member 230. The panels are self-supporting in a sense that they are by construction able to maintain their shape without external support. In contrast to a conventional tarpaulin, for example, the self-supporting panels 211 - 213 are rigid enough to maintain a substantially planar shape, when set to stand on one edge with or without providing lateral support only for maintaining upright position. A particularly suitable material for providing such self-supporting panels is polypropylene or a compound predominantly of polypropylene because polypropylene is very resistant against fatigue. Alternative suitable materials include polycarbonate and polyethylene.

In the example of Fig. 1, the cargo restrainer 200 is shown in a fully extended configuration, where the panels 211 - 213 are consecutively superposed and parallel to each other in a vertical plane forming between the side frame sections 110 of the roll container 100. Overall, the covering member 210 is dimensioned to cover the exposed side of the roll container 100. Accordingly, the covering member 210 and therefore the panels 211 - 213 extend over the width dimension of the roll container 100 and reach over the aligned peripheral frame beams of the opposing side frame sections 110. In other words, the panels 211 - 213 extend over the end corners of side frame sections 110 of the roll container 100 opposing each other.

In between and connecting each successive panel 211 - 213 is a pivoting member 230. The pivoting member 230 connects two adjacent panels to each other. In the example of Fig. 1, one pivoting member 230 connects the bottom panel 211 to the center panel 212 and another pivoting member 230 connects the center panel 212 to the top panel 213. In the example of Fig. 1, there is therefore three panels 211 - 213 and two corresponding pivoting members 230. Generally speaking, there is therefore one less pivoting members than there are panels. The pivoting member 230 is also set up to articulate the connected two adjacent 211, 212, 213 panels in respect to each other about an axis, which extends in the width dimension x, i.e. about the horizontal axis. More specifically, the pivoting member 230 is connects the neighboring edges of two adjacent panels 211, 212, 213 that extend in the width dimension x, i.e. the upper edge of a lower panel and the lower edge of a superposed panel. While such a pivoting member 230 may be constructed in a number of alternative way, the pivoting member 230 may exemplary take the form a deformable strip, which is attached to adjacent panels 211 - 213 and which extends over a vertical gap between the panels 211 - 213. More specifically, the exemplary pivoting member 230 may preferably be made of polypropylene, rubber or another elastic material or alternatively of a fabric or other woven or knitted structure exhibiting suitable flexibility properties.

According to another embodiment (not shown), the panels 211 - 213 may be articulated in respect to each other by using pivoting members 230 formed by the base material of the covering member 210. In such an embodiment the panels 211 - 213 make up the covering member 210 by being integrally and consecutively connected through creases formed in the base material of the covering member 210. At said creases, the material of the covering member 210 is compressed along the width dimension x such to form a horizontal hinge for pivoting two adjacent panels to each other. In such an embodiment there is no gap between individual panels 211 - 213 of the covering member 210.

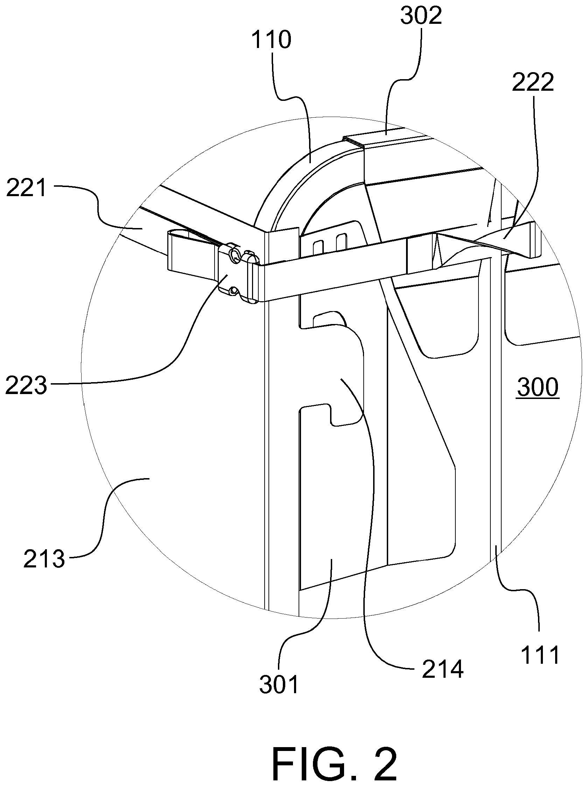

While the cargo restrainer 200 does generally speaking includes at least one strap 220, the example shown in Fig. 1 employs four straps 220 for improved stability and usability. The strap 220 is preferably made of a knitted or woven polypropylene. The bottom panel 211 has been provided with two superposed straps 220 because the bottom panel 211 requires the greatest support. The center and top panels 212, 213 have been provided with only on strap 220. The straps 220 are attached to vertical portions of the mesh 111 in mutually opposing side frame sections 110. Fig. 2 shows the attachment mechanism of the strap 220 in greater detail. As can be seen, the end portion 222 of the strap 220 has been looped around the vertical portion of the mesh 111 of the side frame section 111. The loop of the end portion 222 may be closed by stitching, wherein the strap 220 is effectively fixed to the roll container 100, or alternatively with a removable attachment, such as a Velcro or snap fastener. Fig. 2 also shows the main portion 221 of the strap 220 extending across the panel 213 in the width direction and terminating into a quick coupling 223, which connects the main portion 221 to the end portion 222. The main portion 221 is therefore attached to the outer surface of the panel 213. As the main portion 221 of the strap 220 is fixed to the panel 213 and the end portion 222 of the strap 220 is attached to the side frame section 110 of the roll container 100, the quick coupling 223 provides a release and attachment function there between for opening the covering member 210 one side of a panel at a time.

Also apparent from Fig. 2 is that the lateral edge of the panel 213 has an attachment section 214, which in the illustrated example is a flap protruding from the lateral edge of the panel. The attachment section 214 is constructed to cooperate with the inner sleeve 300, which shall be described here after in greater detail.

The inner sleeve 300 is a sheet made of preferably of polycarbonate due to its shock-resistance and transparency or alternatively of polypropylene, polyethylene or PET. The inner sleeve 300 is shaped to fit inside the container 100 such to cover the bottom and three lateral sides thereof. The edges of the inner sleeve 300 are shaped, i.e. extended, to enclose the peripheral frame beam of the side frame section 110 of the roll container. As seen from Fig. 2, the extension 301, 302 may be flaps, strips or tabs which either enclose horizontally extending top portions of the peripheral frame beam denoted with 302 or vertically extending side portions of the peripheral frame beam denoted with 301. The extensions 301, 302 preferably have integrated fastening accessories, such as cooperating interlocking shapes, i.e. slits, or Velcro or snap fasteners (not shown). The frontal extension 301 of the sleeve 300 is preferably provided with a receptive slit for receiving the attachment section 214 of the panel 213 (Fig. 2).

Next, the use of the cargo restraining system is explained with reference to Figs. 1 and 2. First, the sleeve 300 is introduced into the roll container 100 to cover the inside surfaces thereof, i.e. the bottom and three lateral sides. The sleeve 300 is secured to the roll container 100 by feeding the extensions 301, 302 around the peripheral frame beam and horizontal portions of the mesh 111 of the side frame sections 110 and fastening the extensions 301, 302 to the base material of the sleeve 300 with aid of the fastening accessories (not shown).

The end portions 222 of the straps 220 are attached to the mesh 111 of the side frame section 110 of the roll container. With the end portions 222 in place, the covering member 210 is brought to the exposed side, i.e. the front side, of the roll container 100. The bottom panel 213 is secured to the roll container first by attaching the quick coupling 223 between the end portions 222 and the main portion 221 of the strap 220. The length of the strap 220 may be adjusted with the adjuster (no reference numeral) provided to the quick coupling 223 (Fig. 2). With the bottom panel 213 fastened, the center and top panels 212, 211 are attached similarly and by inserting the attachment section 214 in to the cooperating form in the sleeve 300, i.e. into the receptive slit in the frontal extension 301.

During unloading of the roll container 100 the cargo restrainer 200 can be sequentially removed by undoing the quick coupling 223 of the top panel 211, whereby the top panel 211 may be turned down to flank the center panel 212. This only approximately one thirds of the front side of the roll container 100 is exposed and the spillage of the contents of the container is minimized. As the contents in the top section of the roll container 100 is removed, the middle panel 212 may be opened similarly, whereby the stack containing the top and middle panels 211, 212 may be rotated about the pivoting member 230 connecting the bottom and center panels 213, 212. After removing the contents located at the bottom of the roll container 100, the cargo restrainer 200 may be removed entirely or the covering member 210 may be returned to the cargo restricting configuration as shown in Fig. 1.

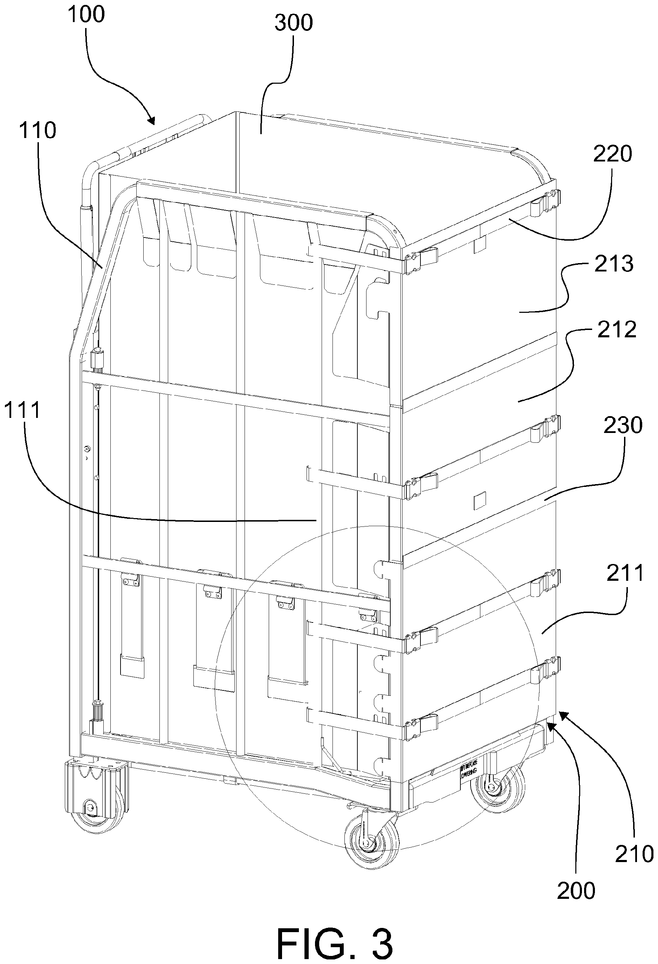

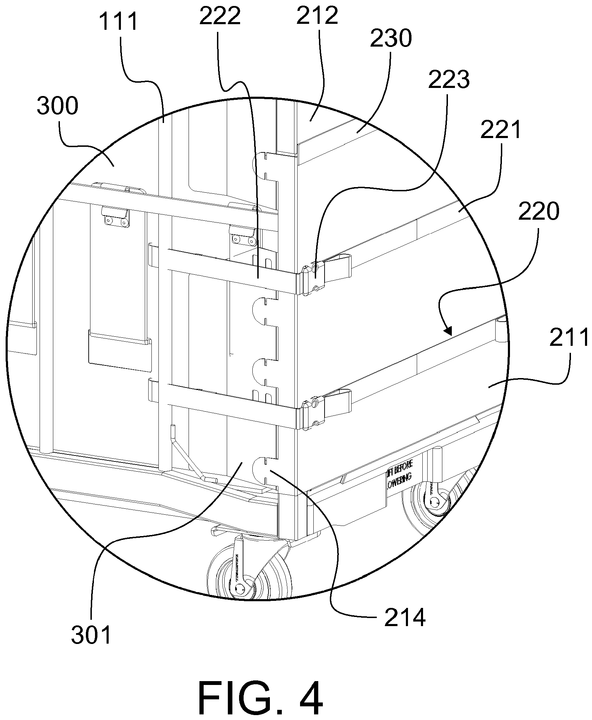

Turning now to an embodiment best illustrated in Fig. 3 and particularly Fig. 4. The covering member 210 may be pivoted about a vertical axis by establishing a vertical articulation connection between the bottom panel 211 and the roll container 100, more specifically the inner sleeve 300. Shown in greater detail in Fig. 4 it may be seen that the front extension 301 of the inner sleeve 300 have been looped around the front upright portion of the side frame section 100 and provided with receiving slits. On the other hand, the bottom panel 211 has been provided with cooperating peripheral attachment sections 214. The attachment sections 214 are protrusions that extend from the lateral edge of the bottom panel 211. The attachment sections 214 are configured to engage with the receiving slits of the inner sleeve 300 in a pivoting manner so as to articulate the covering portion 210 in respect to the roll container 100 and thus to the inner sleeve 300 about a vertical axis. In other words, the inner sleeve 300 and the cargo restrainer have been provided with mutually cooperating contours, which lock the lateral ends of the bottom panel 211 to the inner sleeve 300. In this specific embodiment, however, the same mutually cooperating contours - i.e. the attachment sections 214 - are used for providing a hinge.

It is to be understood, that the cargo restraining system herein described may be modified by construction or use without departing from the inventive concept defined by the claims. Firstly, the covering member 210 may be used independently from the sleeve 300, which may be used to further improve the density of the side frame sections 110 of the roll container 100. Secondly, the covering member 210 may have only two or more than three panels depending on the use. By increasing the number of panels, the covering member 210 may be fine-tuned for size of the expected parcel size being transported in the roll container 100. For letters, for example, a covering member 210 having at least three panels 211 - 213 is preferred.

**TABLE 1: LIST OF REFERENCE NUMBERS.**

| **Number** | **Part** |
|---|---|
| 100 | roll container |
| 110 | side frame section |
| 111 | mesh |
| 200 | cargo restrainer |
| 210 | covering member |
| 211 | panel |
| 212 | panel |
| 213 | panel |
| 214 | attachment section |
| 220 | strap |
| 221 | main portion |
| 222 | end portion |
| 223 | quick coupling |
| 230 | pivoting member |
| 300 | inner sleeve |
| 301 | front extension |
| 302 | top extension |
| x | width dimension |

## Claims

1. A cargo restrainer (200) for a container (100), comprising:
- a covering member (210) extending along a width dimension (x) and along a dimension perpendicular to the width dimension (x) for covering an exposed side of the container (100), and
- a strap (220) configured to attach the covering member (210) to and between the opposing side frame sections of the container (100),
**characterized in that** the covering member (210): is configured to extend over the width dimension (x) of the container (100) and to reach over aligned peripheral frame beams of opposing side frame sections (110) of the container (100),
- comprises a plurality of consecutively connected self-supporting panels (211, 212, 213) and
- comprises at least one pivoting member (230), which is configured to connect two adjacent panels (211, 212, 213) to each other and to articulate the connected two adjacent panels (211, 212, 213) in respect to each other about an axis, which extends in the width dimension (x).

2. The cargo restrainer (200) according to claim 1, wherein the at least one pivoting member (230) is configured to connect neighboring edges of two adjacent panels (211, 212, 213) extending in the width dimension (x).

3. The cargo restrainer (200) according to claim 1 or 2, wherein the width dimension (x) is defined by a horizontal distance between side frame sections (110) of the container (100) opposing each other so as to cover the width of the roll container (100) between said opposing side frame sections (110).

4. The cargo restrainer (200) according to claim 1 or 2 or 3, wherein container (100) is a roll container.

5. The cargo restrainer (200) according to any of the preceding claims, wherein the panels (211, 212, 213) consist at least partially of polypropylene.

6. The cargo restrainer (200) according to any of the preceding claims, wherein the covering member (210) comprises at least three panels (211, 212, 213), which are consecutively connected by pivoting members (230) between each pair of panels (211, 212, 213).

7. The cargo restrainer (200) according to any of the preceding claims, wherein the pivoting member (230) is a deformable strip attaching adjacent panels (211, 212, 213) and extending over a gap there between.

8. The cargo restrainer (200) according to any of the preceding claims, wherein the cargo restrainer comprises a plurality of straps, whereby each panel (211, 212, 213) is provided with a strap (220), wherein each panel may be attached to and detached from a side frame section (110) of the roll container (100).

9. The cargo restrainer (200) according to any of the preceding claims, wherein the strap (220) comprises:
- a main portion (221),
- two end portions (222) provided at opposite ends of the main portion (221) and configured to attach to opposite side frame sections (110) of the roll container (100), and
- a quick coupling (223) connecting the main and end portions (221, 222) to each other.

10. A cargo restraining system for a prismatic container (100), which comprises two lateral frame sections (110) opposing and distanced from each other and at least one exposed lateral side, the system comprising:
- an inner sleeve (300) configured to line the inner side of the three lateral frame sections (110) of the container (100) for preventing small objects from escaping though openings in said frame sections (110), and
- a cargo restrainer (200) for covering the exposed side of the container (100), **characterized in that** the cargo restrainer is as defined by claim 1.

11. The cargo restraining system according to claim 10, wherein:
- the inner sleeve (300) is a self-supporting panel, and wherein
- the inner sleeve (300) and the cargo restrainer have been provided with mutually cooperating contours, which lock the lateral ends of a panel (211, 213) of the cargo restrainer to the inner sleeve (300) for assisting attachment of the strap (220).

12. The cargo restraining system according to claim 11, wherein:
- the inner sleeve (300) comprises at least one receiving slit and
- the panel is a bottom panel (211), which comprises at least cooperating peripheral attachment section (214), which extends from a lateral edge thereof and is configured to engage with the receiving slit of the inner sleeve (300) in a pivoting manner so as to articulate the covering portion (210) in respect to the inner sleeve (300) about a vertical axis,
whereby the cooperating contours also provide a hinge between the inner sleeve (300) and the covering portion (210).

13. A roll container (100), which comprises two lateral frame sections (110) opposing and distanced from each other and at least one exposed lateral side, **characterized by** a cargo restrainer (200) according to any of the preceding claims 1 to 9.

14. A roll container (100), which comprises two lateral frame sections (110) opposing and distanced from each other and at least one exposed lateral side, **characterized by** a cargo restraining system according to any of claims 10 to 12.

## Patentansprüche

1. Frachtsicherung (200) für einen Container (100), umfassend:
- ein Abdeckelement (210), das sich entlang einer Breitenabmessung (x) und entlang einer Abmessung senkrecht zur Breitenabmessung (x) erstreckt, um eine freiliegende Seite des Containers (100) abzudecken, und
- einen Gurt (220), der so ausgelegt ist, dass er das Abdeckelement (210) an und zwischen den gegenüberliegenden Seitenrahmenabschnitten des Containers (100) befestigt,
**dadurch gekennzeichnet, dass** das Abdeckelement (210):
so ausgelegt ist, dass es sich über die Breitenabmessung (x) des Containers (100) erstreckt und über ausgerichtete Umfangsrahmenstreben gegenüberliegender Seitenrahmenabschnitte (110) des Containers (100) reicht,
- eine Vielzahl von aufeinanderfolgend verbundenen selbsttragenden Platten (211, 212, 213) umfasst, und
- mindestens ein Schwenkelement (230) umfasst, das so ausgelegt ist, dass es zwei aneinandergrenzende Platten (211, 212, 213) miteinander verbindet und die verbundenen zwei aneinandergrenzenden Platten (211, 212, 213) in Bezug zueinander um eine Achse, die sich in der Breitenrichtung (x) erstreckt, anlenkt.

2. Frachtsicherung (200) nach Anspruch 1, wobei das mindestens eine Schwenkelement (230) so ausgelegt ist, dass es sich in der Breitenrichtung (x) erstreckende benachbarte Kanten zweier aneinandergrenzender Platten (211, 212, 213) verbindet.

3. Frachtsicherung (200) nach Anspruch 1 oder 2, wobei die Breitenabmessung (x) durch einen horizontalen Abstand zwischen einander gegenüberliegenden Seitenrahmenabschnitten (110) des Containers (100) definiert ist, sodass sie die Breite des Rollcontainers (100) zwischen den gegenüberliegenden Seitenrahmenabschnitten (110) abdeckt.

4. Frachtsicherung (200) nach Anspruch 1 oder 2 oder 3, wobei es sich bei Container (100) um einen Rollcontainer handelt.

5. Frachtsicherung (200) nach einem der vorstehenden Ansprüche, wobei die Platten (211, 212, 213) mindestens teilweise aus Polypropylen bestehen.

6. Frachtsicherung (200) nach einem der vorstehenden Ansprüche, wobei das Abdeckelement (210) mindestens drei Platten (211, 212, 213) umfasst, die aufeinanderfolgend durch Schwenkelemente (230) zwischen jedem Plattenpaar (211, 212, 213) verbunden sind.

7. Frachtsicherung (200) nach einem der vorstehenden Ansprüche, wobei es sich bei dem Schwenkelement (230) um einen verformbaren Streifen handelt, der aneinandergrenzende Platten (211, 212, 213) befestigt und sich über einen Spalt zwischen ihnen erstreckt.

8. Frachtsicherung (200) nach einem der vorstehenden Ansprüche, wobei die Frachtsicherung eine Vielzahl von Gurten umfasst, wodurch jede Platte (211, 212, 213) mit einem Gurt (220) versehen ist, wobei jede Platte an einem Seitenrahmenabschnitt (110) des Rollcontainers (100) befestigt und von diesem gelöst werden kann.

9. Frachtsicherung (200) nach einem der vorstehenden Ansprüche, wobei der Gurt (220) umfasst:
- ein Hauptstück (221),
- zwei Endstücke (222), die an gegenüberliegenden Enden des Hauptstücks (221) bereitgestellt und so ausgelegt sind, dass sie an gegenüberliegenden Seitenrahmenabschnitten (110) des Rollcontainers (100) befestigt werden können, und
- eine Schnellkopplung (223), die den Haupt- und die Endstücke (221, 222) miteinander verbindet.

10. Frachtsicherungssystem für einen prismaförmigen Container (100), der zwei gegenüberliegende und voneinander beabstandete Seitenrahmenabschnitte (110) und mindestens eine freiliegende seitliche Seite umfasst, wobei das System umfasst:
- eine Innenhülle (300), die so ausgelegt ist, dass sie die Innenseite der drei Seitenrahmenabschnitte (110) des Containers (100) auskleidet, um zu verhindern, dass kleine Objekte durch Öffnungen in den Rahmenabschnitten (110) schlüpfen, und
- eine Frachtsicherung (200), um die freiliegende Seite des Containers (100) abzudecken, **dadurch gekennzeichnet, dass** die Frachtsicherung wie durch Anspruch 1 definiert ist.

11. Frachtsicherungssystem nach Anspruch 10, wobei:
- es sich bei der Innenhülle (300) um eine selbsttragende Platte handelt, und wobei
- die Innenhülle (300) und die Frachtsicherung mit wechselseitig zusammenwirkenden Konturen versehen wurden, die die seitlichen Enden einer Platte (211, 213) der Frachtsicherung an der Innenhülle (300) arretieren, um Befestigung des Gurts (200) zu erleichtern.

12. Frachtsicherungssystem nach Anspruch 11, wobei:
- die Innenhülle (300) mindestens einen Aufnahmeschlitz umfasst, und
- es sich bei der Platte um eine untere Platte (211) handelt, die mindestens zusammenwirkenden Umfangsbefestigungsabschnitt (214) umfasst, der sich von einer seitlichen Kante derselben erstreckt und so ausgelegt ist, dass er schwenkbar in den Aufnahmeschlitz der Innenhülle (300) eingreift, um das Abdeckstück (210) in Bezug auf die Innenhülle (300) um eine vertikale Achse anzulenken,
wodurch die zusammenwirkenden Konturen ebenfalls ein Scharnier zwischen der Innenhülle (300) und dem Abdeckstück (210) bereitstellen.

13. Rollcontainer (100), der zwei gegenüberliegende und voneinander beabstandete Seitenrahmenabschnitte (110) und mindestens eine freiliegende seitliche Seite umfasst, **gekennzeichnet durch** eine Frachtsicherung (200) nach einem der vorstehenden Ansprüche 1 bis 9.

14. Rollcontainer (100), der zwei gegenüberliegende und voneinander beabstandete Seitenrahmenabschnitte (110) und mindestens eine freiliegende seitliche Seite umfasst, **gekennzeichnet durch** ein Frachtsicherungssystem nach einem der Ansprüche 10 bis 12.

## Revendications

1. Dispositif de retenue de chargement (200) pour un conteneur (100), comprenant :
- un élément de recouvrement (210) s'étendant le long d'une dimension de largeur (x) et le long d'une dimension perpendiculaire à la dimension de largeur (x) pour recouvrir un côté exposé du conteneur (100), et
- une sangle (220) configurée pour fixer l'élément de recouvrement (210) aux sections de cadre latérales opposées du conteneur (100) et entre celles-ci,
**caractérisé en ce que** l'élément de recouvrement (210) :
est configuré pour s'étendre sur la dimension de largeur (x) du conteneur (100) et pour atteindre des poutres de cadre périphériques alignées des sections de cadre latérales opposées (110) du conteneur (100),
- comprend une pluralité de panneaux (211, 212, 213) autoportants connectés de façon consécutive et
- comprend au moins un élément pivotant (230), qui est configuré pour connecter deux panneaux (211, 212, 213) adjacents l'un à l'autre et pour articuler les deux panneaux (211, 212, 213) adjacents connectés l'un par rapport à l'autre autour d'un axe, qui s'étend dans la direction de largeur (x).

2. Dispositif de retenue de chargement (200) selon la revendication 1, dans lequel le au moins un élément pivotant (230) est configuré pour connecter des bords voisins de deux panneaux (211, 212, 213) adjacents s'étendant dans la direction de largeur (x).

3. Dispositif de retenue de chargement (200) selon la revendication 1 ou 2, dans lequel la dimension de largeur (x) est définie par une distance horizontale entre des sections de cadre latérales (11) du conteneur (100) opposées l'une à l'autre de façon à recouvrir la largeur du conteneur roulant (100) entre lesdites sections de cadre latérales opposées (110).

4. Dispositif de retenue de chargement (200) selon la revendication 1, 2 ou 3, dans lequel le conteneur (100) est un conteneur roulant.

5. Dispositif de retenue de chargement (200) selon l'une quelconque des revendications précédentes, dans lequel les panneaux (211, 212, 213) sont constitués au moins en partie de polypropylène.

6. Dispositif de retenue de chargement (200) selon l'une quelconque des revendications précédentes, dans lequel l'élément de recouvrement (210) comprend au moins trois panneaux (211, 212, 213), qui sont connectés de façon consécutive par des éléments pivotants (230) entre chaque paire de panneaux (211, 212, 213).

7. Dispositif de retenue de chargement (200) selon l'une quelconque des revendications précédentes, dans lequel l'élément pivotant (230) est une bande déformable fixant des panneaux (211, 212, 230) adjacents et s'étendant sur un espace entre ceux-ci.

8. Dispositif de retenue de chargement (200) selon l'une quelconque des revendications précédentes, dans lequel le dispositif de retenue de chargement comprend une pluralité de sangles, selon lequel chaque panneau (211, 212, 213) est doté d'une sangle (220), dans lequel chaque panneau peut être fixé à une section de cadre latérale (110) du conteneur roulant (100) ou détaché de celle-ci.

9. Dispositif de retenue de chargement (200) selon l'une quelconque des revendications précédentes, dans lequel la sangle (220) comprend :
- une partie principale (221),
- deux parties extrémité (222) prévues au niveau d'extrémités opposées de la partie principale (221) et configurées pour être fixées à des sections de cadre latérales opposées (110) du conteneur roulant (100), et
- un couplage rapide (223) connectant les parties principale et d'extrémité (221, 222) l'une à l'autre.

10. Système de retenue de chargement pour un conteneur prismatique (100), qui comprend deux sections de cadre latérales (110) opposées et éloignées l'une de l'autre et au moins un côté latéral exposé, le système comprenant :
- un manchon interne (300) configuré pour tapisser le côté interne des trois sections de cadre latérales (110) du conteneur (100) pour empêcher de petits objets de s'échapper par les ouvertures dans lesdites sections de cadre (110), et
- un dispositif de retenue de chargement (200) pour recouvrir le côté exposé du conteneur (100),
**caractérisé en ce que** le dispositif de retenue de chargement est tel que défini par la revendication 1.

11. Système de retenue de chargement selon la revendication 10, dans lequel :
- le manchon interne (300) est un panneau autoportant, et dans lequel
- le manchon interne (300) et le dispositif de retenue de chargement ont été dotés de contours mutuellement coopérants, qui verrouillent les extrémités latérales d'un panneau (211, 213) du dispositif de retenue de chargement au manchon interne (300) pour faciliter la fixation de la sangle (220).

12. Système de retenue de chargement selon la revendication 11, dans lequel :
- le manchon interne (300) comprend au moins une fente de réception et
- le panneau est un panneau de fond (211), qui comprend au moins une section de fixation périphérique coopérante (214), qui s'étend depuis un bord latéral de celui-ci et est configurée pour venir en prise avec la fente de réception du manchon interne (300) de manière pivotante de façon à articuler la partie de recouvrement (210) par rapport au manchon interne (300) autour d'un axe vertical,
selon lequel les contours coopérants fournissent également une charnière entre le manchon interne (300) et la partie de recouvrement (210).

13. Conteneur roulant (100), qui comprend deux sections de cadre latérales (110) opposées et éloignées l'une de l'autre et au moins un côté latéral exposé, **caractérisé par** un dispositif de retenue de chargement (200) selon l'une quelconque des revendications précédentes 1 à 9.

14. Conteneur roulant (100), qui comprend deux sections de cadre latérales (110) opposées et éloignées l'une de l'autre et au moins un côté latéral exposé, **caractérisé par** un système de retenue de chargement selon l'une quelconque des revendications 10 à 12.
